# FASCICULE DE BREVET EUROPEEN

(11) **EP 2 909 515 B1**
(45) Date de publication et mention de la délivrance du brevet: **24.08.2016**
(21) Numéro de dépôt: 13767027.9
(22) Date de dépôt: 28.08.2013
(51) Int. Cl.: F16K 31/04

(54) **VANNE MUNIE D'UN ACTIONNEUR LINEAIRE POLYPHASE POUR DOSAGE SOUS HAUTE PRESSION**
HOCHDRUCK- DOSIERVENTIL MIT EINEM MULTIPHASEN LINEARAKTUATOR
VALVE FOR DOSAGE UNDER HIGH PRESSURE, WITH A MULTI-PHASE LINEAR ACTUATOR

(30) Priorité: 16.10.2012 FR 1259848
(43) Date de publication de la demande: 26.08.2015
(73) Titulaire: Sonceboz S.A., 2605 Sonceboz (CH)
(72) Inventeur: CREMER, Stéphane, F-25230 Seloncourt (FR); FOUCAUT, Antoine, F-70190 Montarlot les Rioz (FR); GYGER, Simon, CH-2720 Tramelan (CH); HABEGGER, Christophe, CH-2732 Reconvilier (CH)
(74) Mandataire: IP Trust
(86) Numéro de dépôt international: PCT/FR2013/051986
(87) Numéro de publication internationale: WO 2014/060661

(56) Documents cités:
- EP-A2- 1 126 582
- FR-A1- 2 837 032
- GB-A- 907 521

## Description

### DOMAINE TECHNIQUE DE L'INVENTION

L'invention se rapporte à une vanne comportant un actionneur linéaire constitué par un moteur électrique polyphasé formée par un stator et un rotor, ce dernier agissant comme organe de commande au travers de moyens d'entrainement prévu apte à transformer le mouvement rotatif du rotor en un mouvement linéaire de l'organe de commande.

La présente invention trouve une application particulière dans les cas où il est recherché une fonction de dosage sous la forme d'un déplacement linéaire d'un obturateur régulant un débit de fluide sous haute pression, dans une vanne requérant une étanchéité totale.

A l'heure actuelle, il existe de nombreuses solutions d'actionnement électrique équipant les vannes de dosage à haute pression.

### Etat de la technique

On peut mentionner deux types de solutions connues dans l'état de la technique:

La première famille est composée de système avec une étanchéité dynamique. Dans ce cas l'actionneur électrique induit la translation d'un organe de commande solidaire de l'obturateur, lequel collabore avec un élément élastique qui doit assurer l'étanchéité du système. Ce type de solutions permettent de conserver des actionneurs électriques de construction traditionnelle mais présentent deux inconvénients majeurs qui sont :

- Une friction élevée due l'élément élastique qui doit exercer une pression importante sur les parties mobiles pour assurer l'étanchéité dynamique. Cette friction réduit la force disponible pour la commande de l'obturateur est conduit à une taille de moteurs importante et donc des couts composants assez élevés.

- Un manque de fiabilité dans le temps car la friction finit par user le joint qui ne peut pas garantir une étanchéité parfaite de l'organe de commande sur une longue durée de vie, en particulier lorsque la pression interne de la vanne est très élevée c'est à dire est comprise entre 30 et 100 bars.

La seconde famille de vannes connues dans l'état de la technique pour une fonction de dosage linéaire sous haute pression est composée de système à étanchéité statique, c'est-à-dire que l'étanchéité est réalisée par des composants non mobiles tels que des joints en élastomère, qui sont comprimés entre deux composants fixes. Ces solutions sont basées sur l'utilisation d'une douille de fine épaisseur, qui est placée entre la partie statorique et la partie rotorique du moteur électrique, et qui permet de confiner les pièces mobiles du rotor dans un espace fermé et étanche, cette douille étant en matériau amagnétique de façon à ne pas perturber le circuit magnétique dudit moteur électrique.

Ces solutions présentent un avantage important qui consiste à immerger totalement la partie rotorique dans l'environnement soumis à la pression, de façon à éviter d'assurer une étanchéité dynamique, et s'affranchir ainsi des inconvénients précités. La douille, qui permet de fermer la chambre sous pression, est liée au corps de vanne de façon étanche au moyen d'un joint en polymère ou d'une soudure étanche, ces deux éléments étant fixes. Le moteur électrique est constitué dans l'art antérieur d'une partie statorique comportant des tôles de fine épaisseur, qui s'ajuste sur la douille d'étanchéité enfermant le rotor en son sein.

Dans ces solutions de l'état de l''art, les moteurs électriques sont de technologie dite « Tin Can ». Ces moteurs présentent un stator constitué de deux tôles fines enroulées autour de bobines coaxiale, parallèles à l'axe de rotation du rotor. Cette configuration de moteur présentent un entrefer magnétique autrement dit une distance entre l'aimant rotorique et les dents statorique, faible. Si cet entrefer est augmenté, les performances de ces moteurs « Tin Can » se dégradent. Les solutions d'actionneurs linéaires pour fonction de dosage, basées sur de tels moteurs, ne sont donc intéressantes que lorsque l'épaisseur de la douille d'étanchéité reste faible, et permet de conserver un entrefer magnétique du même ordre de grandeur que l'épaisseur des dents statorique. Lorsque l'on augmente l'épaisseur de la douille est donc l'entrefer, apparaissent des courts-circuits magnétiques qui font chuter les performances du moteur et réduise l'efficacité du système de dosage.

Ainsi cette seconde famille d'actionneurs pour système de dosage, actuellement décrite dans l'état de l'art par la combinaison de moteur Pas à Pas de type « Tin Can » avec une chambre rotorique est intéressante pour le contrôle de vannes travaillant sous des pressions faibles ou moyennes. En revanche elle s'avère inutilisable pour les pressions importantes, lorsque l'épaisseur de douille doit être plus importante du fait de la résistance du matériau, cette augmentation étant incompatible avec le circuit magnétique de ces moteurs.

Par ailleurs il existe une autre technologie de moteur électrique polyphasé, et incluant des moyens de transformation du mouvement de rotation en mouvement linéaire, et permettant de travailler avec des entrefers magnétiques plus élevés. Ces moteurs possèdent des bobines disposées radialement sur le stator, lequel possède des dents formées par un empilage de nombreuses tôles qui conduisent à une section de fer importante.

On notera par exemple les solutions décrites dans les brevets FR2837032 et FR2754953, qui décrivent plusieurs solutions de transformations de mouvement interne au rotor du moteur, mais aussi une structure de moteur présentant une section importante des dents statorique. La structure magnétique même de ces moteurs permet de tolérer plus facilement une augmentation de l'entrefer magnétique et l'on conserve donc des performances intéressantes même lorsque l'on augmente l'espace entre le diamètre extérieur de l'aimant et le diamètre intérieur du stator. Il est alors possible d'insérer dans cet entrefer plus confortable, une douille plus épaisse, capable de résister à des pressions de l'ordre de 50 à 100 bars.

On connaît aussi Le brevet GB907521 décrit une électro-vanne proposant la mesure de la position de la tête de vanne et plus précisément de l'extension linéaire de la tête de vanne, et non pas la position angulaire du rotor. Ce brevet décrit une solution avec un anneau magnétique référencée 36, placé en regard à une graduation référencée 35.

Cette solution ne permet en aucune façon de répondre au problème de l'invention, concernant le pilotage précis du moteur polyphasé à partir d'une électronique recevant les informations sur la position angulaire du rotor. Elle permet simplement de fournir une information grossière sur le niveau d'extension linéaire de la tête de vanne.

Le brevet européen EP1126582 ne concerne pas une valve mais un actionneur linéaire. Les problèmes d'étanchéité ne se posent donc pas, et d'ailleurs ne sont pas résolus par ce brevet de l'art antérieur.

Ce document décrit l'utilisation d'une sonde de Hall (14) pour fournir une information de position angulaire du rotor à une électronique de pilotage du moteur.

Il est mentionné la présence d'une paroi en forme de coupelle (31) séparant les parties fixes et les parties mobiles pour éviter le passage de saletés venant des parties mobiles vers les autres parties.

Le problème visé par l'invention n'est pas du tout abordé : on ne cherche aucunement à assurer l'étanchéité requise pour une vanne destinée au dosage de fluide, parfois à des pressions élevées. En particulier, le roulement à bille référencé (9) n'assure pas l'étanchéité du rotor entouré par la paroi référencée (31).

### Solution apportée par l'invention

Le présente invention a pour but de remédier aux limitations des solutions de l'art antérieur décrites précédemment et propose un actionneur électrique linéaire comprenant un moteur polyphasé, constitué d'un stator, comportant une pluralité de pôles bobinés constitués par empilage de plusieurs tôles, et d'un rotor comprenant des moyens de transformation du mouvement de rotation en mouvement linéaire, une douille amagnétique isolant le rotor du stator, et enfin des éléments magnéto sensibles de détection de position du rotor, placés à l'extérieur de la douille. Lesdits éléments magnéto-sensibles sont aptes à détecter l'induction magnétique du rotor au travers de la douille d'isolement.

Ladite douille amagnétique est configurée pour isoler totalement:
- un volume défini par l'intérieur de l'ensemble formé par la douille et un bouchon, ledit volume contenant le rotor et communiquant avec la tête de la vanne, une vis filetée et l'obturateur; et
- un volume défini par l'extérieur de l'ensemble formé par la douille et le bouchon et comprenant le stator, des circuits et raccordements électriques.

### Modes de réalisation :

**Selon un premier mode de réalisation,** l'actionneur linéaire comporte une partie statorique comprenant un boitier enveloppant le stator bobiné. Ce boitier présente un logement pour une carte électronique venant se connecter sur les pins de bobine, cette électronique inclue des éléments magnéto sensibles de faible hauteur qui permettent un soudage automatique identique aux autres composants de la carte pour optimiser les couts de production. Ces composants plats appelés « SMD - Surface Mounting Design », permettent une détection du champ magnétique selon une direction parallèle à l'axe du rotor, ils sont donc positionnés sur un rayon proche de celui de l'aimant. La forme de la douille présente un épaulement sur la partie avant, permettant un maintien entre le boitier du moteur et le boitier du corps de vanne afin de reprendre les efforts axiaux dû à la pression du fluide, qui s'appliquent sur le fond de la douille. Le fond de la douille possède une forme arrondie avec une épaisseur progressive afin de répartir les contraintes de façon homogène, d'optimiser la masse et de réduire les risques de fissures.

Le rotor, possède un aimant cylindrique aimanté radialement dont la longueur est sensiblement plus importante que la hauteur du stator en tôle agrafée. Cette excroissance permet d'utiliser la partie arrière de l'aimant moteur pour exciter les éléments magnéto sensibles, et ce au travers de la douille. Le flux magnétique généré par la partie arrière de l'aimant moteur permet de positionner les éléments magnéto-sensibles sur un rayon supérieur à celui du diamètre extérieur de l'aimant moteur.

La douille forme une enceinte isolant totalement et de manière étanche le stator, et notamment les bobinages, le capteur de position et les connexions électriques d'une part, et le rotor et la liaison mécanique avec la tête de vanne d'autre part. On empêche ainsi toute pénétration de fluide, notamment de fluide sous pression, dans les parties de l'actionneur reliées au courant électrique. Les éventuels défauts d'étanchéité au niveau de la liaison entre l'actionneur et la tête de vanne auront pour seul effet la pénétration de fluide dans le corps de la douille contenant le rotor, qui est inerte et moins sensible que le stator, alimenté électriquement.

L'écrou solidaire du rotor est en liaison hélicoïdale avec la vis, qui constitue l'organe de commande et qui est solidaire de l'obturateur de la vanne, lequel est guidé par une liaison glissière dans le corps du dispositif de dosage. La fonction d'anti- rotation nécessaire à la transformation de mouvement est réalisée à l'extérieur de l'actionneur électrique, dans la vanne, de façon à optimiser la hauteur totale du système de dosage. De cette façon, la construction de l'actionneur électrique ne requiert qu'une seule fois la course de déplacement au niveau de la liaison vis/écrou, alors qu'habituellement de tels actionneurs requièrent, en plus de cette course hélicoïdale, une seconde course suivant un profil droit pour réaliser l'anti rotation nécessaire à la transformation de la rotation du rotor en translation de la vis.

Le rotor est guidé par des éléments roulants qui présentent des jeux axiaux intrinsèques. Pour rattraper ces jeux, un système élastique est inséré entre la douille avant du rotor est le roulement avant. Cet élément élastique exerce une force sur le roulement avant, le rotor et le roulement arrière dont la valeur est choisie supérieure à la valeur maximale de l'effort demandé à l'organe de commande de l'actionneur sur l'obturateur de la vanne. De cette façon, l'écrou est soumis d'une part à la force de l'élément élastique et d'autre part à la force de la vis dont la direction dépend du sens de déplacement. Cette somme étant positive quel que soit le sens de déplacement de l'obturateur, le rotor ne se translate pas dans la douille et la précision axiale du système est optimisée.

L'élément élastique permet également de contraindre la butée à bille positionnée en fond de douille, de sorte qu'elle réalise un centrage du rotor en complément du roulement à bille positionné sur l'avant du rotor. En effet cette butée à bille ne peut réaliser un guidage cylindrique qu'à la condition d'être chargée axialement pour permettre l'auto centrage des douilles par les billes de roulement. Ce type de roulement est intéressant pour sa faible hauteur et permet de réduire la longueur de la douille d'isolement par rapport à la longueur de l'aimant.

La chaine cinématique entre l'écrou du rotor et l'obturateur présente des jeux en rotation et en translation du fait des différentes liaisons en cascade. Lorsque la précision de positionnement de l'obturateur est élevée, il peut être nécessaire de trouver une solution de compensation du jeu axial. Cette compensation peut être faite soit mécaniquement, soit électroniquement.

Selon un premier mode de réalisation, la compensation est électronique et le système de pilotage du moteur intègre une fonction capable de compenser ce jeu en corrigeant la consigne de position en lui ajoutant la valeur du jeu mécanique de la chaine cinématique.

**Selon un second mode de réalisation,** les éléments magnéto sensibles possèdent de longues pattes qui traversent le plan du circuit et sont assemblées selon un procédé de soudage par panne. Ces éléments magnéto sensibles sont décalés du plan du circuit électroniques pour pénétrer les dents de la partie statorique, tout en étant toujours situés à l'extérieur de la chambre haute pression délimitée par la douille s'isolement. Dans ce mode de réalisation les éléments magnéto sensibles détectent la composante radiale de l'induction rotorique.

La douille d'isolement se présente sous la forme d'un cylindre prolongée d'un fond épaulé droit avec une épaisseur de paroi constante, définie en fonction de la pression maximale du fluide et de la limite à la rupture du matériau de la douille. L'épaulement en fond de douille permet d'une part de positionner les éléments magnéto sensibles plus proche de l'extrémité de l'aimant pour améliorer la qualité du signal de position, mais aussi de réduire l'évidement intérieur à la carte électronique portant les composants nécessaires au pilotage du moteur.

Ce deuxième mode de réalisation, plutôt favorable à des pressions moindres, permet d'obtenir une surface utile supérieure pour la carte électronique.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- les figures 1a et 1b représentent une vue en coupe d'un dispositif selon un premier mode de réalisation de l'invention
- la figure 2 représente une vue en coupe d'un dispositif selon un deuxième mode de réalisation.

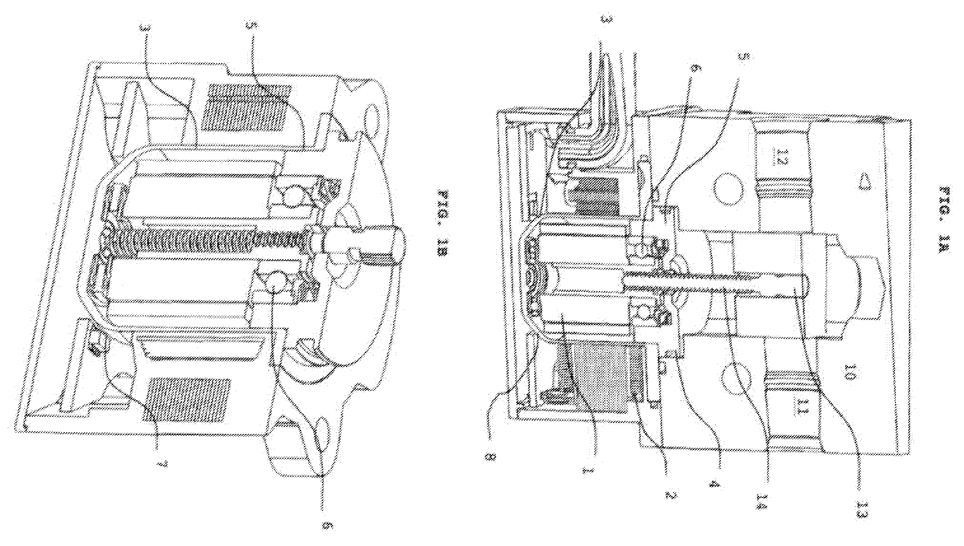

Le dispositif représenté en figures 1a et 1b est particulièrement adapté au pilotage de vanne à hautes pressions.

La vanne décrite à titre d'exemple non limitatif comprend de manière connue une tête (10) présentant un alésage traversant formant un conduit d'entrée (11) et un conduit de sortie (12). Un obturateur (13) entrainé par une vis filetée (14) se déplace à l'intérieur de l'alésage entre une position de fermeture où l'obturateur (13) bouche totalement le passage du fluide entre le conduit d'entrée (11) et le conduit de sortie (12), et une position d'ouverture dans lequel l'obturateur (13) est dégagé du passage du fluide.

La vis filetée (14) est entraînée par un moteur pas-à-pas comprenant un stator (2) et un rotor (1) ainsi que des moyens d'étanchéité évitant la pénétration de fluide dans la partie statorique (2) et les éléments de commande électrique.

Les ensembles statorique (2) et rotorique (1) sont séparés par une douille métallique amagnétique (3) fermée par un bouchon (5) traversé par la vis filetée (14). dont l'épaisseur varie de façon à homogénéiser les contraintes mécaniques internes. Cette douille amagnétique (3) forme une enveloppe entourant le rotor (1). La paroi cylindrique de cette douille amagnétique (3) s'inscrit dans l'entrefer séparant les surfaces périphériques du stator (2) et du rotor (1) et ne viennent pas perturber la circulation des flux magnétiques.

La douille (3) forme avec un bouchon (5) une enceinte fermée, présentant une seule ouverture pour le passage de la vis filetée (14) commande la tête de vanne. Le bouchon (5) - ou la douille (3) - assure le centrage du rotor par l'intermédiaire d'un roulement à bille (6).

La paroi cylindrique de la douille (3) est fermée par un fond (8) sensiblement hémisphérique dont la zone centrale présente un guidage de l'extrémité de la vis filetée (1').

L'ensemble formé par la douille (3) et le bouchon (5) est logé dans le boitier contenant l'ensemble rotorique, notamment les bobines, les connections électriques et le capteur (7). La liaison entre cet ensemble et le boitier est totalement étanche.

La douille amagnétique (3) isole ainsi totalement :
- le volume défini par l'intérieur de la douille (3) et de son bouchon (5), contenant le rotor (1) et communiquant avec la tête de la vanne (10) et notamment la vis filetée (14) et l'obturateur
- le volume défini par le boitier comprenant le stator (2) et les circuits et raccordements électriques ainsi que le capteur (7).

Un joint d'étanchéité statique (4) assure une enveloppe étanche autour des composants mobiles, de sorte que les joints sont utilisés uniquement entre le corps de vanne et l'ensemble formé par la douille (3) et son bouchon (5). Le bouchon (5) porte le roulement de guidage du rotor, (6) et est insérée dans la douille (3). La liaison est réalisée par un emmanchement en force ou, lorsqu'une étanchéité est requise entre ces pièces, par soudage. La fonction d'anti-rotation nécessaire au fonctionnement du système vis écrou n'est pas réalisée dans l'actionneur, mais au travers du guidage de l'obturateur (13) de la vanne dans laquelle la vis est encastrée.

Le rotor (1) est ainsi logé dans la douille (3) formant avec son bouchon (5) une enveloppe étanche empêchant le passage de fluide vers le stator (2), mais laissant passer le champ magnétique en raison de la nature amagnétique du matériau utilisé pour cette douille.

L'entrainement se fait par un stator polyphasé, associé à une électronique de pilotage prenant en compte un signal de positionnement réel du rotor (1). Ce circuit permet de compenser les jeux et les différences entre la position théorique de l'obturateur et la position réelle.

Les jeux cumulés dans la chaine cinématique entre le rotor (1), la vis (14) et l'obturateur (13) induisent en défaut de positionnement de l'obturateur (13).

Les éléments magnéto-sensibles (7) capables de détecter la position réelle du rotor permettent au système de contrôle du moteur de tenir compte de cette hystérésis mécanique et de rattraper ces jeux lors des inversions de sens de rotation.

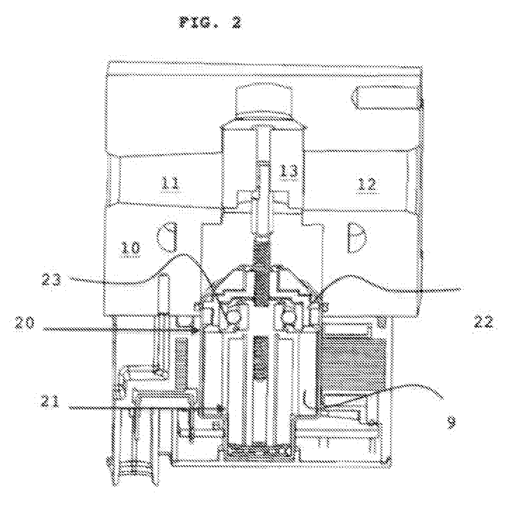

La figure 2 représente une vue en coupe de la solution selon un second mode de réalisation, dans laquelle la douille (3) présente une épaisseur de paroi constante et un épaulement (9) droit, de façon à réduire le trou de passage du circuit électronique et permettre un meilleur positionnement des éléments magnéto sensibles en regard de l'aimant rotorique. La douille (3) présente ainsi une partie cylindrique principale (20) entourant l'aimant rotorique, et une partie cylindrique (21) de section inférieure, reliées par l'épaulement (9).

Le bouchon (22) portant le roulement à bille (23) ferme la partie principale (20) de la douille (3). Un sertissage permet de maintenir cette douille (22) en assurant une précontrainte axiale, nécessaire au fonctionnement de la butée à bille arrière qui centre le rotor. L'étanchéité statique est réalisée au moyen d'un ou plusieurs joints toriques traditionnels placés entre le diamètre extérieur de la douille et l'alésage du corps de vanne. Ces joints offrent une garantie d'étanchéité maximale car ils ne voient aucune friction lors de la commande d'ouverture et de fermeture de la vanne.

## Revendications

1. Vanne de dosage de fluide animée par un actionneur électrique générant la translation d'un obturateur (13), l'actionneur électrique comprenant un moteur polyphasé constitué d'un stator (2) comportant une pluralité de pôles bobinés constitués par empilage de plusieurs tôles, et d'un rotor (1) comprenant des moyens de transformation du mouvement de rotation en mouvement linéaire d'un organe de sortie, une douille amagnétique (3) isolant le rotor (1) du stator (2), et des éléments magnéto-sensibles (7) de détection de position du rotor (1), placés à l'extérieur de la douille (3), **caractérisé en ce que** lesdits éléments magnéto-sensibles captent la position du rotor au travers de la douille d'isolement (3), ladite douille amagnétique (3) étant configurée pour isoler totalement :
- un volume défini par l'intérieur de l'ensemble formé par la douille (3) et un bouchon (5), ledit volume contenant le rotor (1) et communiquant avec la tête (10) de la vanne, une vis filetée (14) et l'obturateur (13); et
- un volume défini par l'extérieur de l'ensemble formé par la douille (3) et le bouchon (5) et comprenant le stator, (2), des circuits et raccordements électriques.

2. Vanne de dosage de fluide selon la revendication 1, **caractérisé en ce que** le mouvement linéaire de l'obturateur (13) est obtenu par l'adjonction d'une liaison de type hélicoïdale agissant entre le rotor (1) et la vis (14) placée à l'intérieur de l'actionneur électrique avec une seconde liaison de type glissière agissant entre l'obturateur et le corps de vanne, située à l'extérieur de l'actionneur.

3. Vanne de dosage de fluide selon les revendications 1 et 2, **caractérisé en ce que** le montage de la douille d'isolement (3) dans le corps de vanne contraint un joint d'étanchéité statique (4) apte à travailler sous haute pression.

4. Vanne de dosage de fluide selon les revendications 1, 2 ou 3, **caractérisé en ce que** la douille d'isolement (3) possède un fond épaulé (9) réalisant un logement pour les éléments magnéto sensible sur un diamètre proche de celui de l'aimant rotorique.

5. Vanne de dosage de fluide selon les revendications 1 et 2 ou 3, **caractérisé en ce que** la douille d'isolement possède une forme apte à recevoir un élément de guidage du rotor

6. Vanne de dosage de fluide selon l'une quelconque des revendications précédentes, **caractérisé en ce que** la douille d'isolement possède une collerette de fixation qui transmet les efforts axiaux dû à la pression au corps de vanne.

7. Vanne de dosage de fluide selon l'une quelconque des revendications précédentes, **caractérisé en ce que** la douille d'isolement possède une qualité de surface soignée apte à collaborer avec un joint d'étanchéité statique placé entre cette douille et le corps de vanne.

8. Vanne de dosage de fluide selon l'une quelconque des revendications précédentes, **caractérisé en ce que** le guidage du rotor comporte au moins une butée à bille axiale (22) qui collabore avec un élément élastique de mise en charge axiale.

9. Vanne de dosage de fluide selon l'une quelconque des revendications précédentes, **caractérisé en ce que** la douille d'isolement comporte un sertissage qui contraint axialement les éléments de guidage en rotation du rotor pour annuler les jeux.

## Patentansprüche

1. Flüssigkeitsdosierventil, das bewegt wird durch ein elektrisches Stellglied, welches die Translation eines Verschlussorgans (13) erzeugt, wobei das elektrische Stellglied einen mehrphasigen Motor umfasst, der aus einem Stator (2) mit mehreren Polen mit Spule besteht, welche durch Stapelung mehrerer Bleche gebildet werden, und einen Rotor (1) mit Mitteln zur Umwandlung der Drehbewegung in eine lineare Bewegung eines Austrittselements, eine unmagnetischen Hülse (3), welche den Rotor (1) vom Stator (2) isoliert, und außerhalb der Hülse (3) positionierte, magnetempfindliche Elemente (7) zur Erfassung der Stellung des Rotors (1), **dadurch gekennzeichnet, dass** besagte magnetempfindliche Elemente die Rotorstellung durch die Isolierhülse hindurch (3) erfassen, wobei besagte unmagnetische Hülse (3) so gestaltet ist, das Folgendes komplett isoliert wird:
- ein durch die Innenfläche der durch die Hülse (3) und das Verschlussorgan (5) gebildeten Einheit abgegrenztes Volumen, wobei sich in diesem Volumen der Rotor (1) befindet, welcher mit dem Kopf (10) des Ventils in Verbindung steht, eine Gewindeschraube (14) und das Verschlussorgan (13), und
- ein durch die Außenfläche der durch die Hülse (3) und das Verschlussorgan (5) gebildeten Einheit abgegrenztes Volumen, in dem befinden sich der Stator, Stromkreise und elektrische Anschlüsse.

2. Fluiddosierventil nach Anspruch 1, **dadurch gekennzeichnet, dass** die lineare Bewegung des Verschlussorgans (13) durch Einfügen einer spiralförmigen Verbindung erzielt wird, die zwischen dem Rotor (1) und der Schraube (14) im Innern des elektrischen Stellglieds mit einer zweiten schienenartigen Verbindung zwischen dem Verschlussorgan und dem Ventilkörper außen am Stellglied befindet.

3. Fluiddosierventil nach Anspruch 1 und 2, **dadurch gekennzeichnet, dass** bei der Montage der Isolierhülse (3) im Ventilkörper ein statischer Dichtungsring (4) gezwungen wird, der in der Lage ist, unter hohem Druck zu arbeiten.

4. Fluiddosierventil nach einem der Ansprüche 1, 2 oder 3, **dadurch gekennzeichnet, dass** die Isolierhülse (3) einen Boden mit Absatz (9) besitzt, der für die magnetempfindlichen Elemente auf einem Durchmesser, der etwa so groß ist, wie der des sich drehenden Magneten, eine Aufnahme bildet.

5. Fluiddosierventile nach den Ansprüchen 1, 2 oder 3, **dadurch gekennzeichnet, dass** die Isolierhülse so geformt ist, dass ein Führungselement für den Rotor aufgenommen werden kann.

6. Fluiddosierventil nach einem der vorhergehenden Ansprüche, **dadurch gekennzeichnet, dass** die Isolierhülse einen Befestigungsflansch aufweist, der die durch den Druck auf das Ventilgehäuse entstehenden axialen Kräfte weiterleitet.

7. Fluiddosierventil nach einem der vorhergehenden Ansprüche, **dadurch gekennzeichnet, dass** die Isolierhülse eine Oberflächengüte aufweist, die dazu geeignet ist, mit einem zwischen Hülse und Ventilgehäuse positionierten statischen Dichtungsring zusammenzuwirken.

8. Fluiddosierventil nach einem der vorhergehenden Ansprüche, **dadurch gekennzeichnet, dass** die Führung des Rotors mindestens ein Axialkugellager (22) aufweist, das mit einem elastischen Element zur axialen Belastung zusammenwirkt.

9. Fluiddosierventil nach einem der vorhergehenden Ansprüche, **dadurch gekennzeichnet, dass** die Isolierhülse eine Einfassung enthält, welche die rotierenden Führungselemente des Rotors axial beansprucht, um das Spiel auszugleichen.

## Claims

1. A fluid dosing valve operated by an electric actuator generating the translation of a shutter (13), with the electric actuator comprising a multiphase motor consisting of a stator (2) having a plurality of wound poles formed by stacking a plurality of sheets, and a rotor (1) comprising means for transforming the rotational movement into a linear movement of an output member, with a non-magnetic sleeve (3) insulating the rotor (1) from the stator (2), and magneto-sensitive elements (7) for detecting the position of the rotor (1) positioned outside the sleeve (3), **characterized in that** said magneto-sensitive elements sense the position of the rotor through the insulating sleeve (3), with said non-magnetic sleeve (3) being so configured as to completely insulate:
- a volume defined by the space inside the assembly formed by the sleeve (3) and a plug (5), with said volume containing the rotor (1) and communicating with the valve head (10), a threaded screw (14) and a shutter (13); and
- a volume defined by the space outside the assembly formed by the sleeve (3) and the plug (5) and comprising the stator (2), electric circuits and connections.

2. A fluid dosing valve according to claim 1, **characterized in that** the linear movement of the shutter (13) is obtained by adding a connection of the helical type acting between the rotor (1) and the screw (14) located inside the electric actuator with a second connection of the slide type acting between the shutter and the valve body, located outside the actuator.

3. A fluid dosing valve according to claims 1 and 2, **characterized in that** the mounting of the insulating sleeve (3) in the body of the valve imparts a constraint onto a static seal (4) capable of working under a high pressure.

4. A fluid dosing valve according to claims 1, 2 or 3, **characterized in that** the insulating sleeve (3) has a stepped bottom (9) creating a housing for the magneto-sensitive elements on a diameter close to that of the rotor magnet.

5. A fluid dosing valve according to claims 1 and 2 or 3, **characterized in that** the insulating sleeve has a shape suitable for receiving a rotor guiding element.

6. A fluid dosing valve according to any one of the preceding claims, **characterized in that** the insulating sleeve has a fastening flange which transmits the axial stress caused by pressure to the valve body.

7. A fluid dosing valve according to any one of the preceding claims, **characterized in that** the insulating sleeve has a high quality surface capable of cooperating with a static seal arranged between the sleeve and the valve body.

8. A fluid dosing valve according to any one of the preceding claims, **characterized in that** the rotor guiding comprises at least one axial ball thrust bearing (22) cooperating with an elastic axial loading element.

9. A fluid dosing valve according to any one of the preceding claims, **characterized in that** the insulating sleeve comprises a crimping which imparts an axial constraint to the rotor rotation guide elements to cancel any clearance.
